# EUROPEAN PATENT APPLICATION

(11) **EP 4 080 173 A1**
(43) Date of publication of application: **26.10.2022**
(21) Application number: 21747639.9
(22) Date of filing: 28.01.2021
(51) Int. Cl.: G01D 7/00

(54) **VEHICLE DISPLAY DEVICE**

(30) Priority: 31.01.2020 WO PCT/JP2020/003669
(71) Applicant: Yamaha Hatsudoki Kabushiki Kaisha, Iwata-shi, Shizuoka 438-8501 (JP)
(72) Inventor: WATANABE Masaki, Iwata-shi, Shizuoka 438-8501 (JP)
(74) Representative: Stöckeler, Ferdinand
(86) International application number: PCT/JP2021/003061
(87) International publication number: WO 2021/153677

(57) **Abstract**

In a vehicle display device configured to display information related to a vehicle, function of a configuration capable of obtaining general tendency is enhanced without complication of the configuration. A vehicle display device 1 includes: a parameter acquisition section 11, a display section 12 configured to display a parameter acquired by the parameter acquisition section 11 as a figure during moving of a motorcycle 20; and a display control section 13 configured to cause the display section 12 to display a figure such that at least two of shape, size, color, luminance, or location of the figure displayed on the display section 12 are changed by using parameters of two or more different types among parameters of a plurality of types related to the motorcycle 20. At least one of the parameters of two or more different types includes one of parameters for promoting action to a driver of the motorcycle 20, that is, a parameter indicating environment information surrounding the motorcycle 20, a parameter indicating information related to an operation by the driver, or a parameter indicating information related to a state of the driver.

## Description

### TECHNICAL FIELD

The present teaching relates to a vehicle display device.

### BACKGROUND ART

A proposed vehicle display device displays information related to a vehicle. As such a vehicle display device, a display device that displays a value of a physical quantity and an extent of a change in the physical quantity is known, as disclosed in Patent Document 1, for example.

The display device of Patent Document 1 displays the value of the physical quantity and the amount of change in the physical quantity per a predetermined time in a meter image showing the value of the physical quantity.

Specifically, in the display device of Patent Document 1, a speed value as a value of a physical quantity is displayed by the position of the tip portion of an arc-shaped pointer in a meter image, and an acceleration degree as the amount of change in the physical quantity per a predetermined time is indicated by the body portion of the arc-shaped pointer. As described above, Patent Document 1 discloses an example of displaying parameters of the same type (speed and acceleration degree) by one figure.

In the display device of Patent Document 1, as disclosed in, for example, FIG. 9 of Patent Document 1, the speed is indicated by the position of the tip portion of the pointer whose position changes relative to a panel portion, and the engine speed is indicated by changing the panel portion with three dimensions. In this manner, Patent Document 1 also discloses an example of displaying parameters of different types in different figures.

On the other hand, another proposed display device indicates parameters of different types by one figure. As such a display device, Patent Document 2, for example, discloses a multidimensional quantity correlation display that displays a plurality of parameters in real time in one figure by giving a correlation.

### CITATION LIST

### PATENT DOCUMENTS

Patent Document 1: Japanese Patent No. 4519853
Patent Document 2: Japanese Patent Application Publication No. H01-207629

### SUMMARY OF INVENTION

The multidimensional quantity correlation display disclosed in Patent Document 2 indicates parameters of different types in one figure to thereby easily obtain general tendency in real time. Recent display devices displaying information related to vehicles have been required to provide enhanced function of display devices in addition to the easy obtaining of general tendency in real time as described above.

It is therefore an object of the present teaching to enhance function of a configuration capable of obtaining general tendency without complication of the configuration in a vehicle display device that displays information related to a vehicle.

### SOLUTION TO PROBLEM

An inventor of the present teaching studied enhancing the function of a configuration capable of obtaining a general tendency without complication of the configuration in a vehicle display device that displays information related to a vehicle.

Through an intensive study, as enhancement of function in a vehicle display device that displays information related to a vehicle, the inventor of the present teaching conceived of displaying a parameter for promoting action to a driver by the display device. Specifically, parameters of two or more different types including the parameter for promoting action to the driver are displayed in one figure so that function of the configuration capable of obtaining general tendency can be enhanced without complication of the configuration in the vehicle display device.

The inventor therefore arrived at the configurations as follows.

A vehicle display device according to one embodiment of the present teaching includes: a parameter acquisition section configured to acquire a parameter related to a vehicle; a display section configured to display the parameter related to the vehicle and acquired by the parameter acquisition section, as a figure during moving of the vehicle; and a display control section configured to cause the display section to display a figure such that at least two of shape, size, color, luminance, or location of the figure displayed on the display section are changed by using parameters of two or more different types among parameters of a plurality of types related to the vehicle. The parameters of the plurality of types related to the vehicle include a parameter indicating information related to a state of the vehicle, a parameter indicating environment information surrounding the vehicle, a parameter indicating information related to an operation by a driver of the vehicle, and a parameter indicating information related to a state of the driver of the vehicle. At least one of the parameters of two or more different types includes one of parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

As described above, the parameters of two or more different types among the parameters of a plurality of types related to the vehicle are displayed in one figure on the display section so that the driver of the vehicle can easily obtain information that changes variously in a complicated manner, such as the state of the vehicle and environment information. That is, a complicated change of state or situation of an object is displayed in a figure so that a person can easily recognize it. Thus, at least two of shape, size, color, luminance, or location of one figure are caused to change by using parameters of two or more different types as described above, so that the driver of the vehicle can easily know complicated and various changes of the state of the vehicle and environment information.

Here, the parameters of the plurality of types related to the vehicle includes the parameter indicating information related to the state of the vehicle, the parameter indicating environment information surrounding the vehicle, the parameter indicating information related to the operation by the driver of the vehicle, and the parameter indicating information related to the state of the driver of the vehicle. Among these parameters, the parameter indicating environment information surrounding the vehicle, the parameter indicating information related to the operation by the driver of the vehicle, and the parameter indicating information related to the state of the driver of the vehicle are parameters for promoting action to the driver.

Since at least one parameter in the parameters of two or more different types is used as a parameter for promoting action to the driver, action can be promoted to the driver. In this manner, by changing at least one of the parameters displayed on the display section, the function of the vehicle display device can be enhanced without complication of the configuration of the vehicle display device.

Thus, in the vehicle display device for displaying information related to the vehicle, function of the configuration capable of obtaining general tendency can be enhanced without complication.

In another aspect, the vehicle display device according to the present teaching preferably has the following configuration. One of the parameters of two or more different types includes one of the parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

Accordingly one of the parameters of at least two or more different types displayed on the display section is a parameter for promoting action to the driver of the vehicle. Thus, with the figure displayed on the display section, action can be more reliably promoted to the driver.

As a result, in the vehicle display device for displaying information related to the vehicle, function of the configuration capable of obtaining general tendency can be enhanced without complication.

In another aspect, the vehicle display device according to the present teaching preferably has the following configuration. The display control section causes the display section to display, as the figure, at least one of the parameters of two or more different types by degree display without scale.

Accordingly, the driver of the vehicle can more easily obtain general tendency of change of at least one of the parameters of two or more different types without recognition or understanding of specific values.

In another aspect, the vehicle display device according to the present teaching preferably has the following configuration. The display control section causes the display section to display, as the figure, the parameters of two or more different types by degree display without scale.

Accordingly, the driver of the vehicle can more easily obtain general tendency of change of the parameters of two or more different types without recognition or understanding of specific values.

In another aspect, the vehicle display device according to the present teaching preferably has the following configuration. The display control section causes the display section to display the figure such that at least three of the shape, size, color, luminance, or location of the figure are changed by using at least three physical quantities in parameters of less than three different types among the parameters of the plurality of types. At least one of the parameters of less than three different types includes one of the parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

Accordingly, the driver of the vehicle can easily know more complicated and various changes of the state of the vehicle and environment information.

In addition, since at least one parameter in the parameters of less than three different types is used as a parameter for promoting action to the driver, action can be promoted to the driver. In this manner, by changing at least one of the parameters displayed on the display section, function of the vehicle display device can be enhanced without complication of the configuration of the vehicle display device.

Thus, in the vehicle display device for displaying information related to the vehicle, function of the configuration capable of obtaining general tendency can be enhanced without complication.

In another aspect, the vehicle display device according to the present teaching preferably has the following configuration. The vehicle is a leaning vehicle configured to lean leftward while turning to left and to lean rightward while leaning to right.

In the case of a leaning vehicle, the driver needs to sufficiently check the road surface condition and a peripheral situation during driving. In such a leaning vehicle, the driver can intuitively recognize information of the vehicle even in a peripheral visual field so that the driver can more easily recognize information of the vehicle.

In addition, in the case of the leaning vehicle, the driver needs to change an operation of the leaning vehicle in accordance with a surrounding environment, operation by the driver, and the state of the driver. On the other hand, as in the configurations described above, a parameter including one of the parameter indicating environment information of surroundings, the parameter indicating information related to an operation by the driver, or the parameter indicating information related to the state of the driver is displayed in a figure so that the driver can easily recognize a parameter for promoting action to the driver even in a peripheral visual field.

Thus, in the case where the vehicle is a leaning vehicle, the configuration of the present teaching is more advantageous.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents, but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

Embodiments of a vehicle display device according to the present teaching will be herein described.

In the following description, numerous specific details are set forth in order to provide a thorough understanding of the present invention. It will be evident, however, to one skilled in the art, that the present invention may be practiced without these specific details.

The present disclosure is to be considered as an exemplification of the invention, and is not intended to limit the invention to the specific embodiments illustrated by the figures or description below.

### [One Figure]

One figure herein includes at least two elements of shape (including the thickness of a line), size, color, luminance, and location. In the one figure, a change of each element affects a change of the figure. The one figure is a figure recognized as one by a driver. The one figure can indicate a state of a vehicle, environment information, and so forth by a change of the at least two elements. In two or more figures, even when an element changes in any one of the figures, the change of this element does not affect the other figure(s). The figure herein is not limited only to shape.

### [Parameter]

A parameter herein refers to a variable that varies depending on, for example, a state of a vehicle, an environment surrounding the vehicle, information related to an operation of the driver, and information related to a state of the driver. Examples of the parameter include values related to rotation of an engine or a motor, a value related to an environment surrounding the vehicle, a value that varies by an operation of the driver, a value indicating the state of the driver, or the like. If sensors for obtaining parameters are of different types, for example, the types of parameters are different.

### [Vehicle]

A vehicle herein refers to a moving object capable of moving a passenger. Examples of the vehicle include vehicles such as a two-wheeled vehicle, a three-wheeled vehicle, and a four-wheeled vehicle, a ship, a submarine, an aircraft, a helicopter, a space ship, a balloon, an electric train, a steam train, a snowmobile, a cable car, an elevator, and any other equipment movable with a person.

### [Parameter Related to Vehicle]

A parameter related to a vehicle herein refers to a variable that varies in relation to the vehicle. Specifically, the parameter related to a vehicle includes a parameter indicating information related to the state of the vehicle, a parameter indicating environment information surrounding the vehicle, a parameter indicating information related to an operation by a driver of the vehicle, and a parameter indicating information related to the state of the driver of the vehicle.

Examples of the parameter indicating information related to the state of the vehicle include a parameter indicating a configuration of the vehicle and a moving condition of the vehicle. Examples of the parameter indicating information related to the state of the vehicle include a distance of the vehicle from a center line, a distance between vehicles, a traveling distance, a traveling time, an intake-air temperature of an engine, an exhaust-air temperature of the engine, a fuel efficiency, an engine speed, a motor speed, a speed change rate of an engine/motor, a torque, an engine output, an engine brake pressure, a traveling speed of the vehicle, an acceleration degree and a deceleration degree of the vehicle, a relative speed relative to other vehicles, a relative acceleration degree relative to other vehicles, a relative deceleration degree relative to other vehicles, a gear position, a vehicle pitch angle, a vehicle yaw angle, a vehicle roll angle, a slip angle, a slip amount, a gear ratio of a transmission, a battery remaining capacity, a battery voltage, a battery temperature, a current amount, a fuel remaining amount, a tire pressure, intake/exhaust noise, front-and-rear-weight distribution, a range of motion of a suspension, a traveling mode, a cooling water temperature, a model year (type) of the vehicle, a TCS intervention amount, a regenerative braking amount, a motor assist amount, a legal overspeed, a cruise-control-setting-vehicle-speed difference, or the like.

The parameter indicating environment information surrounding the vehicle is a parameter related to an environment surrounding the vehicle. Examples of the parameter indicating an environment surrounding the vehicle include weather and a temperature of an area where the vehicle is moving, a wind pressure, a wind velocity, and a wind direction, a sensible temperature, a road condition, a friction coefficient of a road surface, a curvature of a curve, a speed limit that varies depending on a traveling location of the vehicle, a relationship between the speed limit and the vehicle speed, a surrounding traffic situation, a distance to a forward vehicle, a date, or the like.

The parameter indicating information related to an operation by a driver of the vehicle is a parameter related to an input operation to the vehicle of the driver. Examples of the parameter indicating information related to an operation by a driver of the vehicle include a shift timing, a gear stage, a brake operation, a load direction/amount, an accelerator opening degree, a handle turning angle, and a bank angle of the vehicle.

Examples of the parameter indicating information related to the state of the driver of the vehicle include a heartbeat of the driver, and a comfort level, a sight direction, and an awakening level of the driver.

### [Parameter for Promoting Action to Driver]

The parameter for promoting action to the driver refers to a parameter with which the driver of the vehicle can determine the necessity of action and a parameter with which the driver can determine which action is to be taken. Examples of the parameter for promoting action to the driver include the parameter indicating environment information surrounding the vehicle, the parameter indicating information related to an operation by the driver of the vehicle, and the parameter indicating information related to the state of the driver of the vehicle in parameters related to the vehicle. If the environment information is, for example, information of a case where the temperature around the vehicle is low or a case where a friction coefficient of the road surface is low, speed reduction or gentle steering operations can be promoted to the driver of the vehicle. If the information related to operation of the driver is information related to an accelerator opening degree, for example, operation of an optimum accelerator opening degree can be promoted to the driver. If the information related to the state of the driver is information related to heartbeat of the driver, for example, a vehicle driving operation (deceleration or rest) can be promoted to the driver depending on the state of the driver. Any of these cases is an example of promoting action to the driver by using the parameter for promoting action to the driver. Thus, the case of promoting action to the driver by using the parameter for promoting action to the driver is not limited to these examples.

### [Physical Quantity]

The physical quantity herein refers to a variable handled in physics. Specifically, the physical quantity includes quantities of, for example, length, mass, time, and current, and quantities defined from arithmetic relations among these. The physical quantity herein is, for example, a quantity representing physical property and state such as a state and an environment of the vehicle. The parameter related to the vehicle may include a plurality of physical quantities.

### [Degree Display]

The degree display herein does not refer to display of a specific numerical value by a scale or a number, but refers to a display method of displaying a ratio and tendency by, for example, a non-scale graph.

### [Leaning Vehicle]

A leaning vehicle herein is a vehicle that turns in a leaning posture. Specifically, the leaning vehicle is a vehicle that leans leftward when turning to the left and leans rightward when turning to the right in a left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles, as well as two-wheeled vehicles.

### ADVANTAGEOUS EFFECTS OF INVENTION

According to one embodiment of the present teaching, it is possible to enhance function of a configuration capable of obtaining general tendency without complication in a vehicle display device that displays information related to a vehicle.

### BRIEF DESCRIPTION OF DRAWINGS

[FIG. 1] FIG. 1 illustrates a general configuration of a vehicle display device according to a first embodiment.
[FIG. 2] FIG. 2 is a functional block diagram of a vehicle display device according to a second embodiment.
[FIG. 3A] FIG. 3A illustrates a display example of a figure of a display section according to the second embodiment.
[FIG. 3B] FIG. 3B illustrates a display example of a figure of the display section according to the second embodiment.
[FIG. 4] FIG. 4 illustrates an example of a display change of a figure of a display section in a third embodiment.
[FIG. 5] FIG. 5 illustrates an example of a display change of a figure of a display section in a fourth embodiment.
[FIG. 6A] FIG. 6A illustrates a display example of a figure of a display section according to a fifth embodiment.
[FIG. 6B] FIG. 6B illustrates a display example of a figure of the display section according to the fifth embodiment.
[FIG. 7] FIG. 7 illustrates a display example of a figure of a display section according to a sixth embodiment.
[FIG. 8A] FIG. 8A illustrates a display example of a figure of a display section according to a seventh embodiment.
[FIG. 8B] FIG. 8B illustrates a display example of a figure of the display section according to the seventh embodiment.
[FIG. 8C] FIG. 8C illustrates a display example of a figure of the display section according to the seventh embodiment.
[FIG. 9] FIG. 9 illustrates a display example of a figure of a display section according to another embodiment.
[FIG. 10] FIG. 10 illustrates a display example of a figure of the display section according to another embodiment.
[FIG. 11] FIG. 11 illustrates a display example of a figure of the display section according to another embodiment.
[FIG. 12] FIG. 12 illustrates the vehicle display device according to the first embodiment and a display example of a figure of the display section according to the second embodiment.

### DESCRIPTION OF EMBODIMENT

Embodiments will be described hereinafter with reference to the drawings. The dimensions of components in the drawings do not strictly represent actual dimensions of the components and dimensional proportions of the components.

### [First Embodiment]

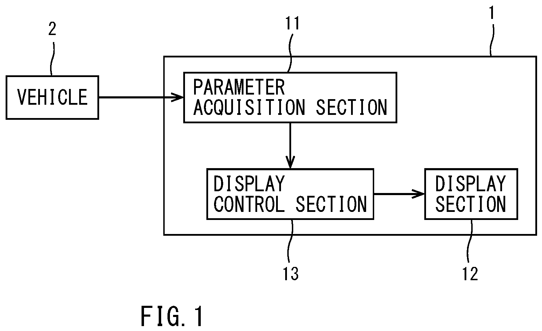

FIG. 1 schematically illustrates an example of a general configuration of a vehicle display device 1 according to a first embodiment of the present teaching. A vehicle 2 includes not only vehicles such as a two-wheeled vehicle, a three-wheeled vehicle, and a four-wheeled vehicle, but also includes any mobile object capable of moving a person, such as a ship and a snowmobile.

The vehicle display device 1 is disposed in, for example, a front portion of the vehicle 2. That is, the vehicle display device 1 is disposed forward of a driver of the vehicle 2. Accordingly, the driver of the vehicle 2 can easily visually recognize the vehicle display device 1.

The vehicle display device 1 displays a parameter related to the vehicle 2 in a figure during moving of the vehicle 2. The vehicle display device 1 changes at least two of shape, size, color, luminance, or location of one figure to be displayed by using parameters of two or more different types among parameters of a plurality of types related to the vehicle 2.

The one figure includes at least two elements of shape, size, color, luminance, or location. Specifically, when the at least two elements change, the figure can thereby display a state and environment information of the vehicle 2, for example. As described above, in this embodiment, the figure is not limited to shape.

The parameters of a plurality of types related to the vehicle 2 refer to variables that vary in relation to the vehicle 2. Specifically, the parameters related to the vehicle 2 include a parameter indicating information related to the state of the vehicle 2, a parameter indicating environment information surrounding the vehicle 2, a parameter indicating information related to an operation by the driver of the vehicle 2, and a parameter indicating information related to the state of the driver of the vehicle 2. Among these parameters, the parameter indicating environment information surrounding the vehicle 2, the parameter indicating information related to an operation by the driver of the vehicle 2, and the parameter indicating information related to the state of the driver of the vehicle 2 are parameters for promoting action to the driver.

At least one of the parameters of two or more different types includes one of the parameters for promoting action to the driver of the vehicle 2, that is, the parameter indicating environment information surrounding the vehicle 2, the parameter indicating information related to an operation by the driver of the vehicle 2, or the parameter indicating information related to the state of the driver of the vehicle 2.

A parameter refers to a variable that varies depending on, for example, the state of the vehicle 2, an environment surrounding the vehicle 2, information related to an operation by the driver, and information related to the state of the driver. Examples of the parameter include a value related to rotation of an engine or a motor, a value related to the environment surrounding the vehicle 2, a value that varies by an operation of the driver, a value indicating a state of the driver, or the like. If sensors for obtaining parameters are of different types, for example, the types of parameters are different.

The parameter for promoting action to the driver refers to a parameter with which the driver of the vehicle 2 can determine the necessity of action and a parameter with which the driver can determine which action is to be taken. If the environment information is, for example, information of a case where the temperature around the vehicle 2 is low or a friction coefficient of the road surface is low, for example, speed reduction or gentle steering operation can be promoted to the driver of the vehicle 2 by displaying the parameter indicating environment information in a figure. In a case where the information related to an operation by the driver is information related to an accelerator opening degree, for example, an optimum operation of the accelerator opening degree for the driver can be promoted by displaying the parameter indicating information related to an operation by the driver in a figure. In a case where the information related to the state of the driver is information related to the heartbeat of the driver, for example, a driving operation (e.g., deceleration or rest) of the vehicle 2 can be promoted to the driver in accordance with the state of the driver by displaying the parameter indicating information related to the state of the driver in a figure.

The parameter indicating environment information is not limited to the temperature around the vehicle 2 or the friction coefficient of the road surface, and may be a parameter described later. The parameter indicating information related to an operation by the driver is not limited to the accelerator opening degree, and may be a parameter described later. The parameter indicating information related to the state of the driver is also not limited to heartbeat of the driver, and may be a parameter described later.

The parameter indicating information related to the state of the vehicle 2 is a parameter indicating a configuration of the vehicle 2, a moving condition of the vehicle 2, and so forth. Examples of the parameters indicating information related to the state of the vehicle 2 include at least one of, for example, a distance of the vehicle 2 from a center line, a distance between vehicles 2, a traveling distance, a traveling time, an intake-air temperature of an engine, an exhaust-air temperature of the engine, a fuel efficiency, an engine speed, a motor speed, a speed change rate of an engine/motor, a torque, an engine output, an engine brake pressure, a traveling speed of the vehicle, an acceleration degree and a deceleration degree of the vehicle 2, a gear position, a pitch angle of the vehicle 2, a yaw angle of the vehicle 2, a roll angle of the vehicle 2, a slip angle, a slip amount, a gear ratio of a transmission, a battery remaining capacity, a battery voltage, a battery temperature, a current amount, a fuel remaining amount, a tire pressure, intake/exhaust noise, front-and-rear-weight distribution, a range of motion of a suspension, a traveling mode, a cooling water temperature, a model year (type) of a motorcycle 20, a TCS intervention amount, a regenerative braking amount, a motor assist amount, a legal overspeed, or a cruise-control-setting-vehicle-speed difference.

The parameter indicating environment information surrounding the vehicle 2 is a parameter related to an environment surrounding the vehicle 2. Examples of the parameter indicating environment information surrounding the vehicle 2 include at least one of, for example, weather and a temperature of an area where the vehicle 2 is moving, a wind pressure, a wind velocity, and a wind direction, a sensible temperature, a road condition, a friction coefficient of a road surface, a curvature of a curve, a speed limit that varies depending on a traveling location of the vehicle, a relationship between the speed limit and the vehicle speed, a surrounding traffic situation, a distance to a forward vehicle, or a date.

The parameter indicating information related to an operation by the driver of the vehicle 2 is a parameter related to an input operation to the vehicle 2. The parameter indicating information related to an operation by the driver of the vehicle 2 includes at least one of, for example, a shift timing, a gear stage, a brake operation, a load direction/amount, an accelerator opening degree, a handle turning angle, or a bank angle of the vehicle 2.

Examples of the parameter indicating information related to the state of the driver of the vehicle 2 include at least one of a heartbeat of the driver, and a comfort level, a sight direction, and an awakening level of the driver.

The vehicle display device 1 includes a parameter acquisition section 11, a display section 12, and a display control section 13.

The parameter acquisition section 11 acquires parameters related to the vehicle 2. Specifically, the parameter acquisition section 11 acquires variables that vary depending on, for example, the state of the vehicle 2, an environment surrounding the vehicle 2, information related to an operation by the driver, and information related to the state of the driver. The parameters acquired by the parameter acquisition section 11 are parameters of two or more different types among parameters of a plurality of types related to the vehicle 2.

The parameter acquisition section 11 includes a plurality of types of sensors and detection devices capable of acquiring parameters of a plurality of types related to the vehicle 2.

The display section 12 displays the parameters acquired by the parameter acquisition section 11 and related to the vehicle 2 in a figure during moving of the vehicle 2. The display section 12 includes a display capable of displaying the figure in white and black or in colors. The display includes, for example, a display screen capable of displaying the figure, such as a liquid crystal display, a plasma display, or an LED display. The display section 12 is attached to a location that is in a front portion of the vehicle 2 and can be visually recognizable by the driver of the vehicle 2 during driving.

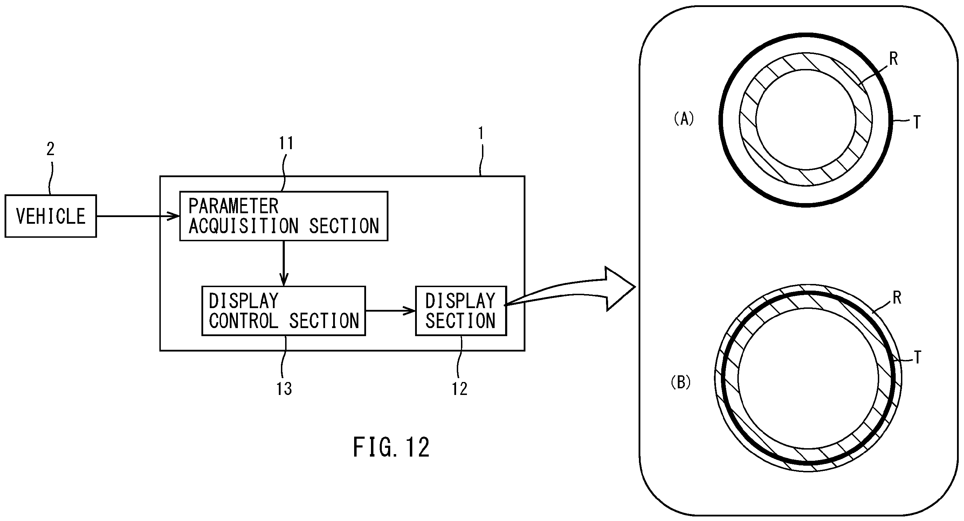

The display section 12 displays a parameter related to the vehicle 2 in a figure during moving of the vehicle 2 based on a control signal output from the display control section 13 described later. Based on a control signal from the display control section 13, the display section 12 changes the figure displayed on the display section 12. FIG. 12 illustrates an example of a figure displayed on the display section 12 of the vehicle display device 1. The figure illustrated in FIG. 12 is the same as a figure described in a second embodiment. The figure is one figure representing a speed as a parameter indicating information related to the state of the vehicle 2, and a relationship between a speed limit and the speed as a parameter indicating environment information surrounding the vehicle 2. As illustrated in FIG. 12, in the figure displayed on the display section 12, at least two of shape, size, color, luminance, or location vary depending on parameters of two or more different types among parameters of a plurality of types related to the vehicle 2. At least one of the parameters of two or more different types includes one of the parameters for promoting action to the driver of the vehicle 2, that is, the parameter indicating environment information surrounding the vehicle 2, the parameter indicating information related to an operation by the driver of the vehicle 2, or the parameter indicating information related to the state of the driver of the vehicle 2. The figure will be specifically described in the second embodiment. The figure displayed on the display section 12 may be a figure other than the figure illustrated in FIG. 12.

The display control section 13 generates a control signal (figure data) that causes the display section 12 to display a figure, based on the parameters acquired by the parameter acquisition section 11, and outputs the control signal to the display section 12. The control signal is a signal that causes the display section 12 to display one figure, such that at least two of shape, size, color, luminance, or location of the one figure displayed on the display section 12 are changed by using parameters of two or more different types among the parameters of a plurality of types related to the vehicle 2.

In the configuration of this embodiment, the vehicle display device 1 includes: the parameter acquisition section 11 configured to acquire a parameter related to the vehicle 2; the display section 12 configured to display the parameter acquired by the parameter acquisition section 11 and related to the vehicle 2 in a figure during moving of the vehicle 2; and the display control section 13 that causes the display section 12 to display one figure, such that at least two of shape, size, color, luminance, or location of the one figure displayed on the display section 12 are changed by using parameters of two or more different types among the parameters of a plurality of types related to the vehicle 2.

As described above, the parameters of two or more different types among the parameters of a plurality of types related to the vehicle 2 are displayed in one figure on the display section 12 so that the driver of the vehicle 2 can easily obtain information that changes variously in a complicated manner, such as the state of the vehicle 2 and environment information. That is, a complicated change of state or situation is displayed in a figure so that a person can easily recognize it. Thus, as described above, at least two of shape, size, color, luminance, or location of one figure are caused to change by using parameters of two or more different types so that the driver of the vehicle 2 can easily know complicated and various changes of the state of the vehicle 2 and environment information.

In the configuration of this embodiment, at least one of the parameters of two or more different types includes one of the parameters for promoting action to the driver of the vehicle 2, that is, the parameter indicating environment information surrounding the vehicle 2, the parameter indicating information related to an operation by the driver of the vehicle 2, or the parameter indicating information related to the state of the driver of the vehicle 2.

As described above, since at least one parameter in the parameters of two or more different types is used as a parameter for promoting action to the driver, action can be promoted to the driver. Thus, by changing at least one of parameters displayed on the display section 12, function of the vehicle display device 1 can be enhanced without complication of the configuration.

Thus, in the vehicle display device 1 for displaying information related to the vehicle 2, function of the configuration capable of obtaining general tendency can be enhanced without complication of the configuration.

### [Second Embodiment]

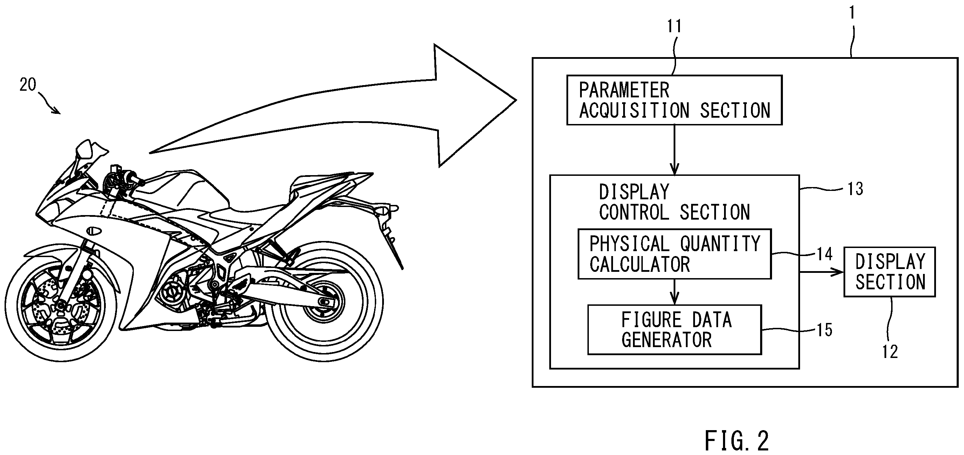

FIG. 2 illustrates a specific configuration of a vehicle display device 1. In the vehicle display device 1 according to this embodiment, a display control section 13 includes a physical quantity calculator 14 and a figure data generator 15. In the following description, components similar to those of the first embodiment are denoted by the same reference characters and will not be described again, and only components different from those of the first embodiment will be described.

In this embodiment and the following embodiments, a vehicle provided with the vehicle display device 1 is, for example, a motorcycle 20. That is, the vehicle according to this embodiment is a leaning vehicle that leans leftward when turning to left and leans rightward when turning to right.

The vehicle display device 1 is disposed in, for example, a front portion of the motorcycle 20. That is, the vehicle display device 1 is disposed forward of a driver of the motorcycle 20. Accordingly, the driver of the motorcycle 20 can easily visually recognize the vehicle display device 1.

As illustrated in FIG. 2, the display control section 13 includes the physical quantity calculator 14 and the figure data generator 15. The display control section 13 generates data (figure data) of a figure to be displayed in the display section 12 from a parameter acquired by the parameter acquisition section 11 and related to the motorcycle 20.

The physical quantity calculator 14 calculates a physical quantity necessary for displaying the figure from the parameters acquired by the parameter acquisition section 11 and related to the motorcycle 20. The physical quantity calculator 14 calculates a plurality of physical quantities with respect to parameters of two or more different types. The calculated physical quantities are used for generating figure data by the figure data generator 15.

The figure data generator 15 generates figure data for displaying one figure by using the plurality of physical quantities calculated by the physical quantity calculator 14. Specifically, the figure data generator 15 generates figure data for varying the one figure in accordance with the plurality of physical quantities. That is, the figure data generator 15 generates figure data for causing at least two of shape, size, color, luminance, or location of one figure to change depending on parameters of two or more different types among the parameters related to the motorcycle 20.

At least one of the parameters of two or more different types includes one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

The figure data generator 15 may generate the figure data by calculation or may previously store figure data to be displayed based on the parameters of two or more different types in a storage section to read out the figure data from the storage section in accordance with the values of the parameters.

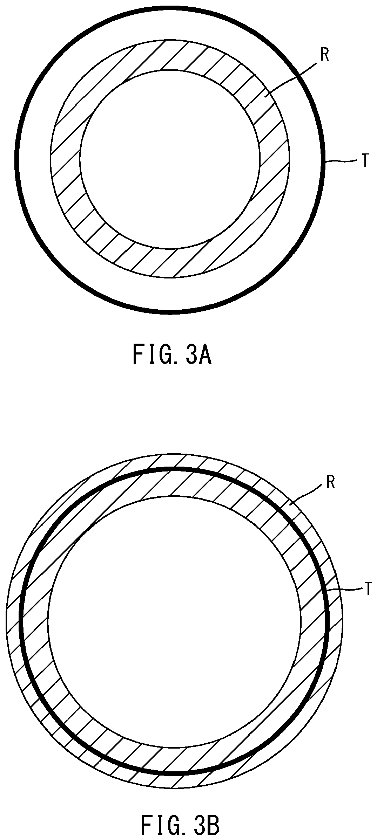

FIG. 3 illustrates a display example of the display section 12 by the vehicle display device 1. In the example of this embodiment, the display section 12 displays one figure as a combination of a speed of the motorcycle 20 and a relationship between a speed limit and the speed.

The parameter acquisition section 11 acquires the speed of the motorcycle 20 and data related to a speed limit. The parameter acquisition section 11 acquires data related to the speed limit in accordance with a travel position of the motorcycle 20. The parameter acquisition section 11 may acquire data related to the speed limit transmitted to the motorcycle 20 from external equipment or may acquire data related to the speed limit in accordance with the travel position of the motorcycle 2 from data stored in a navigation device of the motorcycle 20. Based on the data of the speed and the speed limit acquired by the parameter acquisition section 11, the display control section 13 generates figure data to be displayed on the display section 12 such as a liquid crystal display.

The display control section 13 generates, as the figure data, a ring R whose outer diameter varies in accordance with the speed and whose color is different between a case where the speed is less than or equal to a speed limit and a case where the speed exceeds the speed limit. The display control section 13 generates a circular speed limit line T to be displayed on the display section 12, by using data acquired by the parameter acquisition section 11 and related to the speed limit.

As illustrated in FIG. 3A, the display control section 13 generates figure data for displaying the ring R in, for example, green, in a case where the outer circumference of the ring R is located radially inside the speed limit line T. On the other hand, as illustrated in FIG. 3B, the display control section 13 displays the ring R in orange in a case where the outer circumference of the ring R is located radially outside the speed limit line T. The colors of the ring R described above are examples, and may be other colors.

In the case where the vehicle is the motorcycle 20 that is a leaning vehicle as described in this embodiment, the driver needs to sufficiently check the road surface condition and a peripheral situation during driving. In such a motorcycle 20, the driver can intuitively recognize information of the vehicle even in a peripheral field so that the driver can more easily recognize information of the motorcycle 20. In addition, in the motorcycle 20 that is a leaning vehicle, the driver needs to change an operation of the motorcycle 20 in accordance with a surrounding environment, operation by the driver, and the state of the driver. On the other hand, as in the configurations described above, a parameter including one of the parameter indicating environment information of surroundings, the parameter indicating information related to an operation by the driver, or the parameter indicating information related to the state of the driver is displayed in a figure so that the driver can easily recognize a parameter for promoting action to the driver even in a peripheral visual field. Thus, in the case of applying the vehicle display device 1 to the motorcycle 20, the configuration of this embodiment is more advantageous.

### [Third Embodiment]

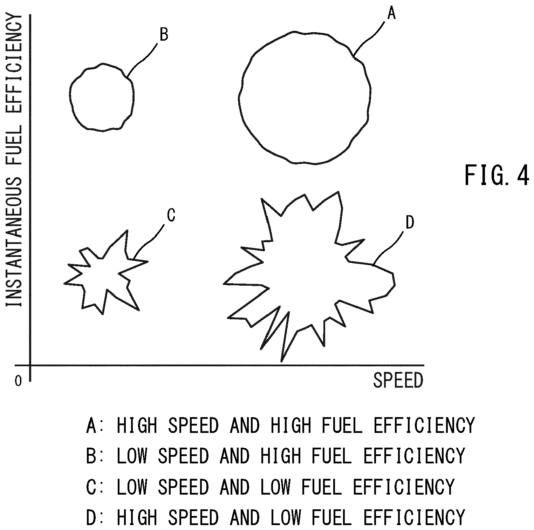

FIG. 4 illustrates examples of figures with different instantaneous fuel efficiencies and different speeds of a motorcycle 20. In this embodiment, the speed and the instantaneous fuel efficiency of the motorcycle 20 are combined and displayed on a display section 12 as one figure. The configuration of a vehicle display device 1 is similar to the configuration described in the second embodiment.

As illustrated in FIG. 4, as the instantaneous fuel efficiency increases, the outer shape of the figure becomes smoother. In the state of the highest instantaneous fuel efficiency, the figure is a circle. On the other hand, as the instantaneous fuel efficiency decreases, the number of projections and depressions of the figure increases and the size of the projections and depressions becomes large. As the speed of the motorcycle 20 increases, the outer shape of the figure is enlarged.

Thus, in a case where the speed of the motorcycle 20 is high and the instantaneous fuel efficiency is high (A in FIG. 4), for example, the figure is a large circle. In a case where the speed of the motorcycle 20 is high but the instantaneous fuel efficiency is low (D in FIG. 4), the figure is large and has a large number of projections and depressions. In a case where the speed of the motorcycle 20 is low and the instantaneous fuel efficiency is high (B in FIG. 4), the figure is a small circle. In a case where the speed of the motorcycle 20 is low and the instantaneous fuel efficiency is low (C in FIG. 4), the figure is small and has a large number of projections and depressions. As described above, the figure displayed on the display section 12 is displayed in degree display without scale.

Figure data generated by the display control section 13 is output to the display section 12, and displayed as a figure by the display section 12. The display control section 13 updates figure data to be generated in accordance with the speed and the instantaneous fuel efficiency of the motorcycle 20. Thus, the size of the outer shape and the shape (projections and depressions) of the figure displayed on the display section 12 vary.

In general, a bar graph is used for indicating an instantaneous fuel efficiency of, for example, a vehicle. Such a bar graph enables a driver to determine an instantaneous fuel efficiency. However, it is not easy for the driver to determine and learn a situation allowing fuel-efficient accelerator work.

On the other hand, in the display example of this embodiment, the driver of the motorcycle 20 can easily perform energy-saving driving of the motorcycle 20 and can intuitively feel variation in fuel efficiency due to acceleration operation by performing accelerator work such that the figure displayed on the display section 12 has a smooth shape in any speed range. Accordingly, the driver of the motorcycle 20 can easily learn accelerator work providing high fuel efficiency of the motorcycle 20.

In the configuration of this embodiment, the display control section 13 causes the display section 12 to display one figure such that at least two of shape, size, color, luminance, or location of the one figure displayed on the display section 12 are caused to change by using parameters of two or more different types among parameters of a plurality of types related to the motorcycle 20.

Accordingly, the driver of the motorcycle 20 can easily know complicated and various change of the state of the vehicle and environment information.

At least one of the parameters of two or more different types may include one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20. That is, in the figures illustrated in FIG. 4, an accelerator opening degree may be indicated in colors, for example. In this case, for example, when an accelerator opening degree is appropriate, the figure may be indicated in green, and when an accelerator opening degree is inappropriate, the figure may be indicated in orange.

A parameter for changing colors of the figures in FIG. 4 may be parameters other than the accelerator opening degree, as long as the parameter is the parameter for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20. The color of the figure that changes depending on the parameter may be colors other than the colors described above.

The display control section 13 causes the display section 12 to display, as the one figure, at least one of the parameters of two or more different types by degree display without scale.

Accordingly, the driver of the motorcycle 20 can more easily know a change of at least one of the parameters of two or more different types without recognition or understanding of specific values.

The display control section 13 causes the display section 12 to display, as the one figure, the parameters of two or more different types by degree display without scale.

Accordingly, the driver of the motorcycle 20 can more easily know a change of the parameters of two or more different types without recognition or understanding of specific values.

In this embodiment, the shape of the figure displayed on the display section 12 changes in accordance with the instantaneous fuel efficiency. Alternatively, the shape of the figure displayed on the display section 12 may change in accordance with an average fuel efficiency. The shape of the figure displayed on the display section 12 may change in accordance with the speed of the motorcycle 20, and the size of the figure displayed on the display section 12 may change in accordance with the instantaneous fuel efficiency or the average fuel efficiency. In addition, the shape of the figure displayed on the display section 12 may change in accordance with the accelerator opening degree, and the size of the figure displayed on the display section 12 may change in accordance with the instantaneous fuel efficiency, the average fuel efficiency, or the speed of the motorcycle 20. The shape of the figure displayed on the display section 12 may change in accordance with the instantaneous fuel efficiency, the average fuel efficiency, or the speed of the motorcycle 20, and the size of the figure displayed on the display section 12 may change in accordance with the accelerator opening degree. A parameter not indicated by the shape and size of the figure displayed on the display section 12 among the instantaneous fuel efficiency, the average fuel efficiency, and the speed of the motorcycle 20 may be indicated by the color of the figure.

### [Fourth Embodiment]

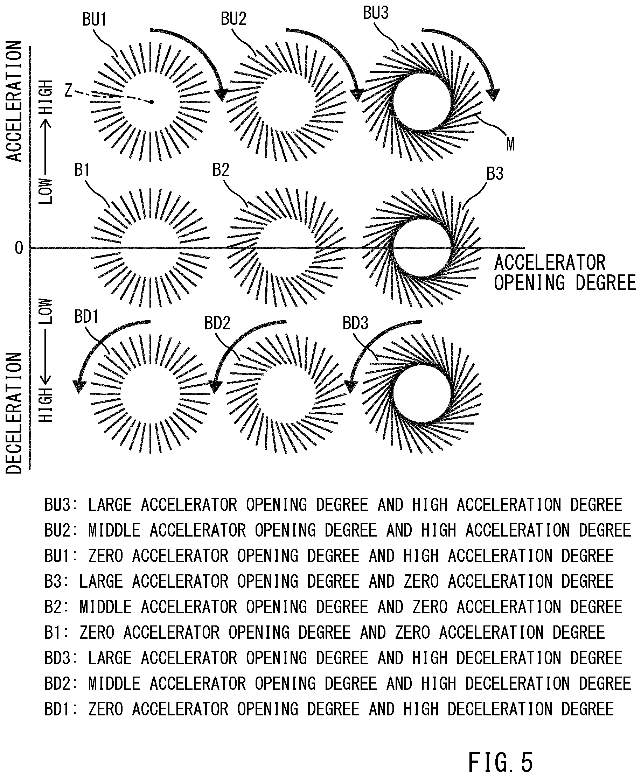

FIG. 5 illustrates display examples of a display section 12 by a vehicle display device 1. In this embodiment, the display section 12 displays one figure as a combination of an accelerator opening degree and an acceleration degree (or deceleration degree) of a motorcycle 20. The configuration of the vehicle display device 1 is similar to the configuration described in the second embodiment.

A parameter acquisition section 11 acquires data related to the accelerator opening degree and the acceleration degree (or deceleration degree) of the motorcycle 20. Based on the data of the accelerator opening degree and the acceleration degree (or deceleration degree) acquired by the parameter acquisition section 11, a display control section 13 generates figure data to be displayed on the display section 12 such as a liquid crystal display. That is, the display control section 13 generates figure data for causing the display section 12 to display, as one figure, the accelerator opening degree that is the parameter indicating information related to an operation by the driver of the motorcycle 20 and the acceleration degree (or deceleration degree) that is the parameter indicating information related to the state of the motorcycle 20.

The display control section 13 generates, as the figure data, figure data in which as the accelerator opening degree increases, the amount of torsion of a plurality of radially arranged lines M increases, and as the degree of acceleration degree (or deceleration degree) increases, the rotation speed of the plurality of lines M increases. The display control section 13 changes the rotation direction of the plurality of lines M between acceleration and deceleration.

FIG. 5 illustrates examples of figures with different accelerator opening degrees and different acceleration degrees (or deceleration degrees). In the display examples of this embodiment, as illustrated in FIG. 5, the plurality of lines M radially extending about a point Z are displayed on the display section 12.

As illustrated in FIG. 5, as the accelerator opening degree increases, the amount of torsion of the radially arranged lines M increases. With the largest accelerator opening degree, the amount of torsion of the plurality of lines M is large. On the other hand, with an accelerator opening degree of zero, the amount of torsion of the plurality of lines M is zero. In a case where the motorcycle 20 accelerates, the plurality of lines M rotate clockwise about the point Z. In a case where the motorcycle 20 decelerates, the plurality of lines M rotate counterclockwise about the point Z. In the case where the motorcycle 20 accelerates or decelerates, as the degree of the acceleration or deceleration increases, the rotation speed of the plurality of lines M increases.

Thus, in a case where the accelerator opening degree of the motorcycle 20 is large and the motorcycle 20 accelerates (BU3), for example, the plurality of lines M in the figure quickly rotate clockwise (in the direction indicated by the solid arrow in BU3 in FIG. 5) with a large amount of torsion. In a case where the accelerator opening degree of the motorcycle 20 is large and the motorcycle 20 decelerates (BD3 in FIG. 5), the plurality of lines M in the figure quickly rotate counterclockwise (in the direction indicated by the solid line in BD3 in FIG. 5) with a large amount of torsion.

When the accelerator opening degree is reduced with acceleration of the motorcycle 20, the amount of torsion of the plurality of lines M in the figure decreases, as shown in BU3, BU2, and BU1 in FIG. 5. When the accelerator opening degree is reduced with deceleration of the motorcycle 20, the amount of torsion of the plurality of lines M in the figure also decreases, as shown in BD3, BD2, and BD1 in FIG. 5.

In a case where the acceleration of the motorcycle 20 is zero, the plurality of lines M in the figure do not rotate, as shown in B3, B2, and B1 in FIG. 5. In this case, only the amount of torsion of the plurality of lines M in the figure changes in accordance with the accelerator opening degree of the motorcycle 20.

As described above, the figure displayed on the display section 12 is displayed by degree display without scale.

Figure data generated by the display control section 13 is output to the display section 12, and displayed as a figure by the display section 12. The display control section 13 updates figure data to be generated, depending on the accelerator opening degree and the acceleration degree (or deceleration degree) of the motorcycle 20. Thus, the amount of torsion of the plurality of lines M and location (rotation speed) of the figure displayed on the display section 12 change.

In the motorcycle 20, acceleration and deceleration are generally adjusted by adjusting the accelerator opening degree based on the amount of twisting of an accelerator grip. Thus, in this embodiment, the amount of torsion of the plurality of lines M in the figure displayed on the display section 12 is changed by using the accelerator opening degree so that the amount of torsion and the accelerator opening degree can be easily correlated intuitively. In addition, rotation of the plurality of lines M is changed depending on acceleration and deceleration of the motorcycle 20, so that the driver of the motorcycle 20 can easily imagine accelerator work for constant speed travel or efficient acceleration.

In the configuration of this embodiment, in a manner similar to the other embodiments, the display control section 13 causes the display section 12 to display one figure such that at least two of shape, size, color, luminance, or location of the one figure displayed on the display section 12 are changed by using parameters of two or more different types among parameters of a plurality of types related to the motorcycle 20. At least one of the parameters of two or more different types includes one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

In this embodiment, the parameters of two or more different types displayed on the display section 12 may include a parameter related to the state of the motorcycle 20 other than the acceleration degree (or deceleration degree). The parameters of two or more different types displayed on the display section 12 may include a parameter for promoting action to the driver of the motorcycle 20, other than the accelerator opening degree. All the parameters of two or more different types displayed on the display section 12 may be parameters for promoting action to the driver of the motorcycle 20.

The display control section 13 causes the display section 12 to display, as the one figure, at least one of the parameters of two or more different types by degree display without scale.

In this embodiment, in the figure displayed on the display section 12, the amount of torsion of the plurality of lines M changes in accordance with the accelerator opening degree. Alternatively, the amount of torsion of the plurality of lines M may change in accordance with acceleration or deceleration. Rotation of the plurality of lines M changes in accordance with acceleration and deceleration of the motorcycle 20. Alternatively, rotation of the plurality of lines M may change in accordance with the accelerator opening degree.

### [Fifth Embodiment]

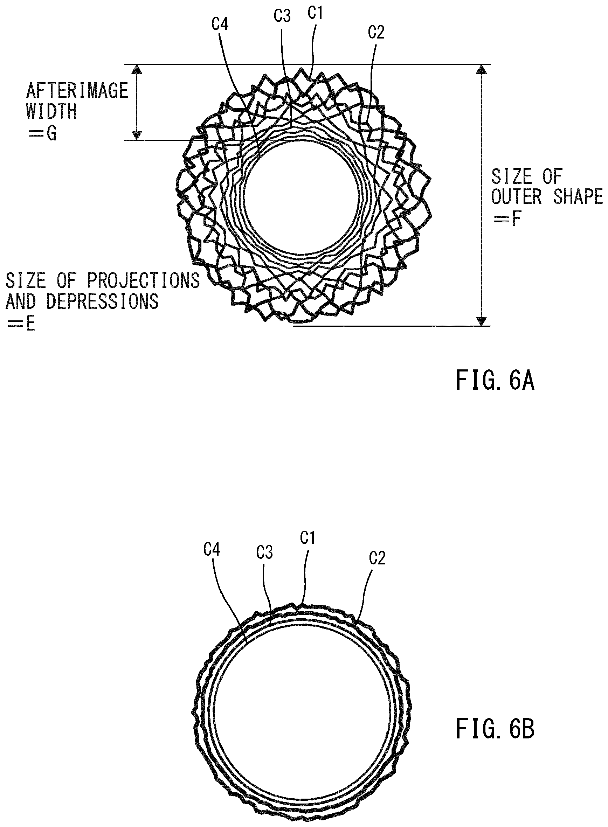

FIGS. 6A and 6B illustrate display examples of a display section 12 by a vehicle display device 1. In this embodiment, the display section 12 displays one figure as a combination of three parameters E, F, and G related to a motorcycle 20. The configuration of the vehicle display device 1 is similar to the configuration described in the second embodiment.

A parameter acquisition section 11 acquires data of the three parameters E, F, and G related to the motorcycle 20. Based on the data of the parameters E, F, and G acquired by the parameter acquisition section 11, a display control section 13 generates figure data to be displayed on the display section 12 such as a liquid crystal display. The parameter E is, for example, an accelerator opening degree. The parameter F is, for example, an engine speed. The parameter G is, for example, an acceleration degree or a deceleration degree.

The display control section 13 generates, as the figure data, figure data in which projections and depressions of the shape of the figure change in accordance with the parameter E, the size of the figure changes in accordance with the parameter F, and a range of change of an afterimage through a change of the figure in accordance with the parameter G changes.

FIGS. 6A and 6B illustrate examples of figures with the different parameters E, F, and G. In the following description, it is assumed that the parameters E, F, and G are an accelerator opening degree, an engine speed, and an acceleration degree, respectively. In the display examples of this embodiment, the figure displayed on the display section 12 includes a plurality of circles C1 through C4 that are arranged in the radial direction, and the outer shape of each circle is deformed in the radial direction in accordance with the accelerator opening degree, which will be described later. The circles herein include not only smooth shapes but also shapes having projections and depressions. In FIGS. 6A and 6B, only some of the plurality of circles are denoted by reference signs C1 through C4.

As illustrated in FIG. 6A, as the accelerator opening degree of the motorcycle 20 increases, projections and depressions of the plurality of circles C1 through C4 of the figure are enlarged. The outer shape of the figure is not stationary and is always deformed within a constant range in the radial direction defined in accordance with the accelerator opening degree. As the engine speed of the motorcycle 20 increases, the outer shape of the figure is enlarged. For example, as the engine speed of the motorcycle 20 increases, the diameter of the outermost circle C1 in the figure is enlarged. As the acceleration degree of the motorcycle 20 increases, a range of change of afterimages through the changes of the plurality of circles C1 through C4 in the figure as described above increases.

Thus, in a case where the accelerator opening degree and the acceleration degree are large and the engine speed is high in the motorcycle 20 (FIG. 6A), the plurality of circles C1 through C4 in the figure have large projections and depressions, and the outer shape of the figure is large. The range of change of afterimages through the changes of the plurality of circles C1 through C4 in the figure is large. On the other hand, in a case where the accelerator opening degree and the acceleration degree are small and the engine speed is low in the motorcycle 20 (FIG. 6B), the plurality of circles C1 through C4 in the figure hardly have projections and depressions, and the outer shape of the figure is small. The range of change of afterimages through the changes of the plurality of circles C1 through C4 in the figure is small. As described above, the figure displayed on the display section 12 is displayed by degree display without scale.

Figure data generated by the display control section 13 is output to the display section 12. Accordingly, a figure is displayed on the display section 12. The display control section 13 updates figure data to be generated in accordance with the accelerator opening degree, the acceleration degree, and the engine speed of the motorcycle 20. Thus, in the figure displayed on the display section 12, the plurality of circles C1 through C4 change in the radial direction.

In general, in a case where the motorcycle 20 is an engine vehicle, when the engine speed increases, engine noise becomes high and large. Thus, the driver of the motorcycle 20 can sensuously know an increase in acceleration degree due to an increase in engine output, by sound or vibrations. However, since EV engines and silent engines have been employed in recent years, it has been more difficult for a driver to obtain the state of the motorcycle 20 by sense, as described above.

This reduces elements with which the state of the motorcycle 20 is conveyed to the driver by sense and also reduces "excitation," which is attraction for the motorcycle 20. On the other hand, since the display section 12 provides a display as described in this embodiment, senses conveyed by sound and vibrations to date can be visually expressed.

In the configuration of this embodiment, in a manner similar to the other embodiments, the display control section 13 causes the display section 12 to display one figure such that at least two of shape, size, color, luminance, or location of the one figure displayed on the display section 12 are changed by using parameters of two or more different types among parameters of a plurality of types related to the motorcycle 20. At least one of the parameters of two or more different types includes one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

The display control section 13 causes the display section 12 to display, as the one figure, at least one of the parameters of two or more different types by degree display without scale.

In this embodiment, the parameters E, F, and G may be any parameter as long as the parameters are related to the motorcycle 20. It should be noted that at least one of the parameters E, F, and G is one of the parameter indicating environment information surrounding the motorcycle 20, the parameter indicating information related to an operation by the driver of the motorcycle 20, or the parameter indicating information related to the state of the driver of the motorcycle 20.

### [Sixth Embodiment]

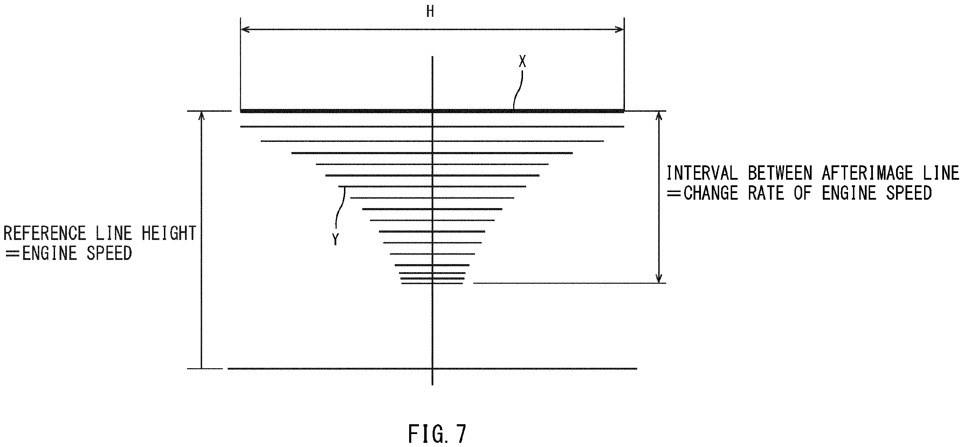

FIG. 7 illustrates a display example of a display section 12 by a vehicle display device 1. In the example of this embodiment, the display section 12 displays one figure as a combination of a parameter H related to a motorcycle 20, an engine speed, and a change rate of the engine speed. The configuration of the vehicle display device 1 is similar to the configuration described in the second embodiment.

A parameter acquisition section 11 acquires data related to the parameter H and the engine speed of the motorcycle 20. Based on the data of the parameter H and the engine speed acquired by the parameter acquisition section 11, a display control section 13 generates figure data to be displayed on the display section 12 such as a liquid crystal display. The parameter H is, for example, an accelerator opening degree.

The display control section 13 generates, as the figure data, figure data in which the length of a reference line X changes in accordance with the parameter H, the position of the reference line X is higher as the engine speed increases, and an interval between lines Y as an afterimage of the reference line X decreases as the change rate of the engine speed increases.

FIG. 7 illustrates an example of the figure displayed on the display section 12. In the following description, the parameter H is an accelerator opening degree that is a parameter indicating information related to an operation by the driver of the motorcycle 20. In the display example of this embodiment, the figure displayed on the display section 12 includes a linear reference line X (bold line in FIG. 7) whose position changes in accordance with the engine speed and lines Y (thin lines in FIG. 7) as an afterimage that is formed by movement of the reference line and disappears in a predetermined time. The length of the reference line X changes in accordance with the accelerator opening degree of the motorcycle 20.

As illustrated in FIG. 7, as the accelerator opening degree of the motorcycle 20 increases, the length of the reference line X increases. As the engine speed of the motorcycle 20 increases, the position of the reference line X becomes higher. When the reference line X changes, the lines Y as an afterimage of the reference line X are displayed on the display section 12 in a predetermined time. As the change rate of the engine speed of the motorcycle 20 increases, the interval between the afterimage lines Y decreases. As described above, the figure displayed on the display section 12 is displayed by degree display without scale.

Figure data generated by the display control section 13 is output to the display section 12. Accordingly, a figure is displayed on the display section 12. The display control section 13 updates figure data to be generated in accordance with the accelerator opening degree, the engine speed, and the change rate of the engine speed of the motorcycle 20. Thus, in the figure displayed on the display section 12, the length and position of the reference line X, and the interval between the afterimage lines Y and the number of the afterimage lines Y change.

In the display example of this embodiment, in a manner similar to the display example of the fifth embodiment, the feeling of an increase in engine speed and the feeling of deceleration in shift down in a conventional engine vehicle can be visually expressed. Accordingly, the driver of the motorcycle 20 can obtain an operating condition of power of the motorcycle 20 by sense.

In the configuration of this embodiment, in a manner similar to the other embodiments, the display control section 13 causes the display section 12 to display one figure such that at least two of shape, size, color, luminance, or location of the one figure displayed on the display section 12 are changed by using parameters of two or more different types among parameters of a plurality of types related to the motorcycle 20. At least one of the parameters of two or more different types includes one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

The display control section 13 causes the display section 12 to display, as the one figure, at least one of the parameters of two or more different types by degree display without scale.

In addition, the display control section 13 causes the display section 12 to display the one figure such that at least three of shape, size, color, luminance, or location of the one figure are changed by using at least three physical quantities in parameters of less than three different types among the parameters of different types.

In this embodiment, the parameter H may be any parameter related to the motorcycle 20 as long as the parameter is any one of the parameter indicating environment information surrounding the motorcycle 20, the parameter indicating information related to an operation by the driver of the motorcycle 20, or the parameter indicating information related to the state of the driver of the motorcycle 20.

In this embodiment, three items of shape, size, and location of the figure are changed by using three physical quantities of the accelerator opening degree, the engine speed, and the change rate of the engine speed in two parameters of the accelerator opening degree and the engine speed.

Accordingly, the driver of the motorcycle 20 can easily know more complicated and various changes of the state of the motorcycle 20 and environment information.

In this embodiment, at least one of the parameters of less than three different types includes one of the parameters for promoting action to the driver, that is, the parameter indicating environment information surrounding the vehicle, the parameter indicating information related to an operation by the driver of the vehicle, or the parameter indicating information related to the state of the driver of the vehicle. As described above, since at least one parameter in the parameters of less than three different types is used as a parameter for promoting action to the driver, action can be promoted to the driver. By changing at least one of parameters displayed on the display section 12, function of the vehicle display device 1 can be enhanced without complication of the configuration.

Thus, in the vehicle display device 1, function of the configuration capable of obtaining general tendency can be enhanced without complication of the configuration.

### [Seventh Embodiment]

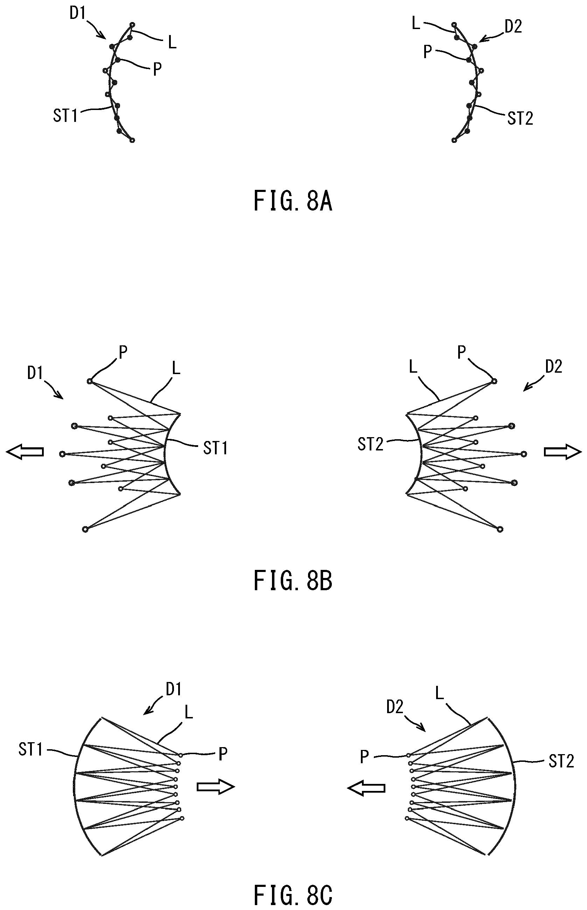

FIGS. 8A through 8C illustrate display examples of a display section 12 by a vehicle display device 1. In this embodiment, the display section 12 displays one figure as a combination of two parameters related to a motorcycle 20. The configuration of the vehicle display device 1 is similar to the configuration described in the second embodiment. The two parameters to be combined in this embodiment are, for example, an accelerator opening degree that is a parameter indicating an operation by a driver of the motorcycle 20 and an acceleration degree (or deceleration degree) that is a parameter indicating information related to the state of the motorcycle 20.

A parameter acquisition section 11 acquires data related to the accelerator opening degree and the acceleration degree (or deceleration degree) of the motorcycle 20. Based on the data of the accelerator opening degree and the acceleration degree (or deceleration degree) acquired by the parameter acquisition section 11, a display control section 13 generates figure data to be displayed on the display section 12 such as a liquid crystal display.

The display control section 13 generates, as the figure data, figure data including a pair of rows D1 and D2 in which a plurality of points P are arranged to form arcs and each adjacent two of the points P are connected by a line L. In this figure data, the pair of rows D1 and D2 are in line symmetry.

The display control section 13 generates, as the figure data, figure data in which when the plurality of points P move in a radial direction, the points P form triangles whose vertexes are at the points P in the pair of rows D1 and D2. The display control section 13 generates, as the figure data, figure data in which in the pair of rows D1 and D2, as the accelerator opening degree of the motorcycle 20 increases, the positions of the plurality of points P more greatly vary, and as the acceleration degree (or deceleration degree) of the motorcycle 20 increases, the amount of movement of the plurality of points P increases.

FIGS. 8A through 8C illustrate examples of the figure displayed on the display section 12. In the display examples of this embodiment, as illustrated in FIG. 8A, the figure displayed on the display section 12 includes the pair of rows D1 and D2 in which the plurality of points P are arranged to form arcs and each adjacent two of the points P are connected by the line L.

As illustrated in FIG. 8B, as the accelerator opening degree of the motorcycle 20 increases, the positions of the plurality of points P in the pair of rows D1 and D2 more greatly vary. As the acceleration degree (or deceleration degree) of the motorcycle 20 increases, the amount of movement of the plurality of points P in the pair of rows D1 and D2 from reference locations ST1 and ST2 increases. In a case where the motorcycle 20 accelerates, the points P in one of the pair of rows D1 and D2 moves away from the other row with respect to the reference location ST1 or ST2. As illustrated in FIG. 8C, in a case where the motorcycle 20 decelerates, the plurality of points P in one of the pair of rows D1 and D2 move toward the other row with respect to the reference location ST1 or ST2.

Figure data generated by the display control section 13 is output to the display section 12, and displayed as a figure by the display section 12. The display control section 13 updates figure data to be generated, depending on the accelerator opening degree and the acceleration degree (or deceleration degree) of the motorcycle 20. Thus, in the figure displayed on the display section 12, the positions of the plurality of points P and the length of each line L vary.

In general, in a case where the motorcycle 20 is an engine vehicle, when the engine speed increases, engine noise becomes high and large. Thus, the driver of the motorcycle 20 can know an increase in acceleration degree due to an increase in engine output by sense based on sound and vibrations. However, since EV engines and silent engines have been employed in recent years, it has been more difficult for a driver to obtain the state of the motorcycle 20 by sense, as described above.

This reduces elements with which the state of the motorcycle 20 is conveyed to the driver by sense and also reduces "excitation," which is attraction for the motorcycle 20. On the other hand, since the display section 12 provides a display as described in this embodiment, senses conveyed by sound and vibrations to date can be visually expressed.

In the configuration of this embodiment, in a manner similar to the other embodiments, the display control section 13 causes the display section 12 to display one figure such that at least two of shape, size, color, luminance, or location of the one figure displayed on the display section 12 are changed by using parameters of two or more different types among parameters of a plurality of types related to the motorcycle 20. At least one of the parameters of two or more different types includes one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

In this embodiment, the parameters of two or more different types displayed on the display section 12 may include a parameter related to the state of the motorcycle 20 other than the acceleration degree (or deceleration degree). The parameters of two or more different types displayed on the display section 12 may include a parameter for promoting action to the driver of the motorcycle 20, other than the accelerator opening degree. The parameters of two or more different types displayed on the display section 12 may include a parameter indicating environment information surrounding the motorcycle 20. The parameters of two or more different types displayed on the display section 12 may include the parameter indicating information related to the state of the driver of the motorcycle 20. All the parameters of two or more different types displayed on the display section 12 may be parameters for promoting action to the driver of the motorcycle 20.

The display control section 13 causes the display section 12 to display, as the one figure, at least one of the parameters of two or more different types by degree display without scale.

### (Other Embodiments)

The embodiments of the present teaching have been described above, but the above embodiments are merely examples for carrying out the invention. Thus, the present teaching is not limited to the embodiments, and the embodiments may be modified as necessary within a range not departing from the gist of the teaching.

In the display examples described in the second through sixth embodiments, the figure may be displayed in color, or may be displayed by a three-dimensional image. With such display of the figure, the driver of the motorcycle 20 can easily obtain the state of the motorcycle 20 by sense.

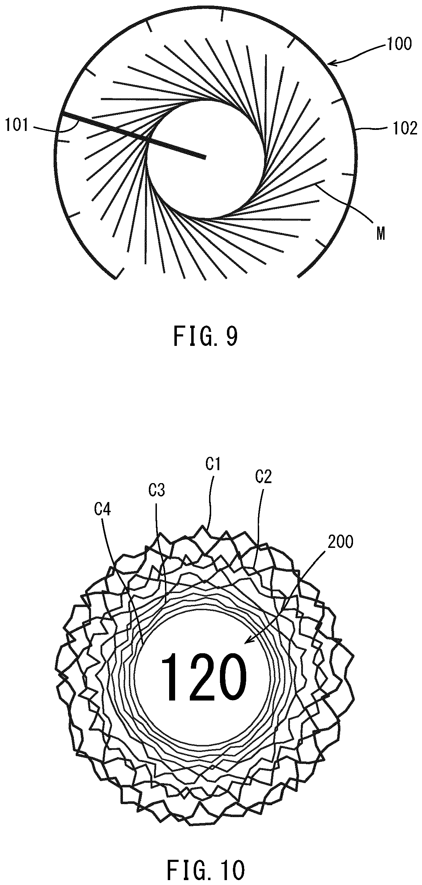

The display examples described in the second through seventh embodiments may be combined with a conventional meter display. FIG. 9 illustrates an example of a combination of the display example of the fourth embodiment and a meter display 100. FIG. 10 illustrates an example of a combination of the display example of the fifth embodiment and a meter display 200 with a number. In FIG. 9, reference numeral 101 denotes a pointer of a meter, and reference numeral 102 denotes a scale of the meter.

As described above, the combination of the display example of each embodiment and the meter display enhances convenience for the driver of the motorcycle 20. For example, when the driver of the motorcycle 20 visually recognizes a meter display, the driver can obtain more accurate information. On the other hand, in a case where the driver of the motorcycle 20 carefully looks ahead, the driver visually recognizes the display example of each embodiment in a peripheral visual field of the driver so that the driver can obtain the state of the motorcycle 20 by sense.

Some of the display examples described from the second through seventh embodiments may be provided with scale. The display examples described in the second through seventh embodiments may be combined with a display with scale.

In the first and second embodiments, the display section 12 is disposed in a front portion of the motorcycle 20. Alternatively, the display section may be detachably attached to the front portion of the motorcycle. The display section may be a display section of a portable terminal. The display section is not limited to a display device attached to a motorcycle, and only needs to be a device that displays a figure at a position at which a driver can visually recognize the figure, such as a visor of a helmet attached to the head of a driver of a motorcycle, a head mount display, a goggle-type VR terminal, and a glass-type terminal.

In the vehicle display device, at least some of the parameter acquisition section, the display control section, or the display section may be constituted as separate parts. The vehicle display device may be constituted by a portable terminal such as a portable communication terminal or a portable computation terminal.

In this case, a figure is preferably displayed on a display section to not block the field of view of the driver.

In the second embodiment, the display section 12 displays one figure as a combination of the speed and the relationship between the speed limit and the speed of the motorcycle 20. Alternatively, other parameters of a plurality of types related to a motorcycle may be combined so that one figure as described in the second embodiment is displayed on the display section. In addition to the speed and the relationship between the speed limit and the speed of the motorcycle, other parameters related to the motorcycle may be combined so that one figure is displayed on the display section.

In the third embodiment, the display section 12 displays one figure as a configuration of the speed and the instantaneous fuel efficiency of the motorcycle 20. Alternatively, other parameters of a plurality of types related to the motorcycle may be combined so that one figure as described in the third embodiment is displayed on the display section. Further, other parameters related to the motorcycle may be combined in addition to the speed and the instantaneous fuel efficiency of the motorcycle so that one figure is displayed on the display section.

In the fourth embodiment, the display section 12 displays one figure as a combination of the accelerator opening degree and the acceleration degree (or deceleration degree) of the motorcycle 20. Alternatively, other parameters of a plurality of types related to the motorcycle may be combined so that one figure as described in the fourth embodiment is displayed on the display section. In addition to the accelerator opening degree and the acceleration degree (or deceleration degree) of the motorcycle, other parameters related to the motorcycle may be combined so that one figure is displayed on the display section.

In the fifth embodiment, the display section 12 displays one figure as a combination of the accelerator opening degree, the acceleration degree (or deceleration degree), and the engine speed of the motorcycle 20. Alternatively, other parameters of a plurality of types related to the motorcycle may be combined so that one figure as described in the fifth embodiment is displayed on the display section. In addition to the accelerator opening degree, the acceleration degree (or deceleration degree), and the engine speed of the motorcycle, other parameters related to the motorcycle may be combined so that one figure is displayed on the display section.

In the sixth embodiment, the display section 12 displays one figure as a combination of the accelerator opening degree, the engine speed, and the change rate of the engine speed of the motorcycle 20. Alternatively, other parameters of a plurality of types related to the motorcycle may be combined so that one figure as described in the sixth embodiment is displayed on the display section. In addition to the accelerator opening degree, the engine speed, and the change rate of the engine speed of the motorcycle, other parameters related to the motorcycle may be combined so that one figure is displayed on the display section.

In the seventh embodiment, the display section 12 displays one figure as a combination of the accelerator opening degree and the acceleration degree (or deceleration degree) of the motorcycle 20. Alternatively, other parameters of a plurality of types related to the motorcycle may be combined so that one figure as described in the seventh embodiment is displayed on the display section. In addition to the accelerator opening degree and the acceleration degree (or deceleration degree) of the motorcycle, other parameters related to the motorcycle may be combined so that one figure is displayed on the display section.

The display examples described in the second through seventh embodiments may be displayed on the display section in combination.

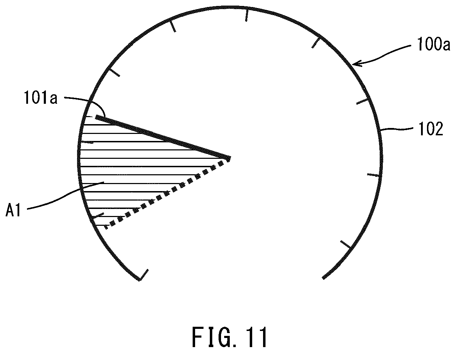

As illustrated in FIG. 11, a plurality of parameters may be displayed based on the position and luminance of a pointer 101a of a meter display 100a and an afterimage A1 in movement of the pointer 101a. Specifically, the position of the pointer 101a in the rotation direction changes in accordance with the engine speed (output rotation speed). The luminance of the pointer 101a changes in accordance with the accelerator opening degree. The size of the afterimage A1 in movement of the pointer 101a changes in accordance with the amount of change of the engine speed (or output rotation speed).

Accordingly, the driver of the vehicle can visually recognize a change of the engine speed (or output rotation speed) and a change of the accelerator opening degree by sense.

In the display example of FIG. 11, another parameter related to the vehicle may be displayed. For example, color or shape of the pointer 101a or the afterimage A1 may be changed by using one of the parameters for promoting action to the driver of the motorcycle 20, that is, the parameter indicating environment information surrounding the motorcycle 20, the parameter indicating information related to an operation by the driver of the motorcycle 20, or the parameter indicating information related to the state of the driver of the motorcycle 20.

The display examples in the second through seventh embodiments are not restrictive. Any figure may be displayed on the display section as long as at least two of shape, size, color, luminance, or location of one figure is changed by using parameters of two or more different types among parameters of a plurality of types related to a vehicle. In this case, at least one of the parameters of two or more different types includes one of the parameters for promoting action to the driver of the vehicle, that is, the parameter indicating environment information surrounding the vehicle, the parameter indicating information related to an operation by the driver of the vehicle, or the parameter indicating information related to the state of the driver of the vehicle.

The parameters of two or more different types may include the parameter indicating information related to the state of the vehicle and the parameter indicating environment information surrounding the vehicle. The parameters of two or more different types may include the parameter indicating information related to the state of the vehicle and the parameter indicating information related to an operation by the driver of the vehicle. The parameters of two or more different types may include the parameter indicating information related to the state of the vehicle and the parameter indicating information related to the state of the driver of the vehicle. The parameters of two or more different types may include the parameter indicating environment information surrounding the vehicle and the parameter indicating information related to an operation by the driver of the vehicle. The parameters of two or more different types may include the parameter indicating environment information surrounding the vehicle and the parameter indicating information related to the state of the driver of the vehicle. The parameters of two or more different types may include the parameter indicating information related to an operation by the driver of the vehicle and the parameter indicating information related to the state of the driver of the vehicle.

In each combination described above, as the parameters of two or more different types, at least one of the parameter indicating information related to the state of the vehicle, the parameter indicating environment information surrounding the vehicle, the parameter indicating information related to an operation by the driver of the vehicle, or the parameter indicating the state of the driver of the vehicle.

The parameters of two or more different types may be only the parameter indicating environment information surrounding the vehicle, may be only the parameter indicating information related to an operation by the driver of the vehicle, or may be only the parameter indicating the state of the driver of the vehicle. The parameters of two or more different types may include only at least one of the parameter indicating environment information surrounding the vehicle, the parameter indicating information related to an operation by the driver of the vehicle, or the parameter indicating the state of the driver of the vehicle.

In the embodiments, the vehicle is, for example, the motorcycle 20. Alternatively, the configurations of the embodiments are also applicable to vehicles other than the motorcycle. Here, a vehicle refers to a mobile object capable of moving the passenger. Examples of the vehicle include vehicles such as a two-wheeled vehicle, a three-wheeled vehicle, and a four-wheeled vehicle, a ship, a submarine, an aircraft, a helicopter, a space ship, a balloon, an electric train, a steam train, a snowmobile, a cable car, an elevator, and any other equipment movable with a person.

A driving source of the vehicle may be an engine, a motor, or a hybrid system using a combination of the engine and the motor.

### Reference Signs List

- 1: vehicle display device
- 2: vehicle
- 11: parameter acquisition section
- 12: display section
- 13: display control section
- 14: physical quantity calculator
- 15: figure data generator
- 20: motorcycle
- 100: meter display
- 101: pointer
- 102: scale
- 200: meter display
- T: speed limit line
- R: ring
- M: line
- C1 to C4: circle
- X: reference line
- Y: afterimage line
- D1, D2: row
- ST1, ST2: reference location
- P, Z: point
- L: line

## Claims

1. A vehicle display device comprising:
a parameter acquisition section configured to acquire a parameter related to a vehicle;
a display section configured to display the parameter related to the vehicle and acquired by the parameter acquisition section, as a figure during moving of the vehicle; and
a display control section configured to cause the display section to display a figure such that at least two of shape, size, color, luminance, or location of the figure displayed on the display section are changed by using parameters of two or more different types among parameters of a plurality of types related to the vehicle, wherein
the parameters of the plurality of types related to the vehicle include a parameter indicating information related to a state of the vehicle, a parameter indicating environment information surrounding the vehicle, a parameter indicating information related to an operation by a driver of the vehicle, and a parameter indicating information related to a state of the driver of the vehicle, and
at least one of the parameters of two or more different types includes one of parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

2. The vehicle display device according to claim 1, wherein
one of the parameters of two or more different types includes one of the parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

3. The vehicle display device according to claim 1 or 2, wherein
the display control section causes the display section to display, as the figure, at least one of the parameters of two or more different types by degree display without scale.

4. The vehicle display device according to claim 3, wherein
the display control section causes the display section to display, as the figure, the parameters of two or more different types by degree display without scale.

5. The vehicle display device according to any one of claims 1 to 4, wherein
the display control section causes the display section to display the figure such that at least three of the shape, size, color, luminance, or location of the figure are changed by using at least three physical quantities in parameters of less than three different types among the parameters of the plurality of types, and
at least one of the parameters of less than three different types includes one of the parameters for promoting action to the driver, the parameters for promoting action to the driver being the parameter indicating environment information surrounding the vehicle, the parameter indicating information related to the operation by the driver of the vehicle, or the parameter indicating information related to the state of the driver of the vehicle.

6. The vehicle display device according to any one of claims 1 to 5, wherein
the vehicle is a leaning vehicle configured to lean leftward while turning to left and to lean rightward while leaning to right.
